(19) Europäisches Patentamt
European Patent Office
Office européen des brevets

(11) EP 2 009 030 B1

# (12) EUROPEAN PATENT SPECIFICATION

(45) Date of publication and mention of the grant of the patent:
**07.11.2012 Bulletin 2012/45**

(21) Application number: **07742011.5**

(22) Date of filing: **13.04.2007**

(51) Int Cl.:
***C08F 4/04*** (2006.01) ***C08F 4/42*** (2006.01)
***C08F 220/00*** (2006.01) ***C08F 293/00*** (2006.01)
***C08L 33/06*** (2006.01) ***C09J 7/02*** (2006.01)
***C09J 133/06*** (2006.01)

(86) International application number:
**PCT/JP2007/058575**

(87) International publication number:
**WO 2007/119884 (25.10.2007 Gazette 2007/43)**

## (54) RESIN COMPOSITION AND HEAT-RESISTANT ADHESIVE

HARZZUSAMMENSETZUNG UND HITZEBESTÄNDIGER KLEBSTOFF

COMPOSITION DE RÉSINE ET ADHÉSIF THERMORÉSISTANT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.04.2006 JP 2006111857**

(43) Date of publication of application:
**31.12.2008 Bulletin 2009/01**

(73) Proprietor: **Otsuka Chemical Co., Ltd.**
**Osaka-shi,**
**Osaka 540-0021 (JP)**

(72) Inventor: **KAWANO, Kazuhiro**
**Tokushima-shi, Tokushima 771-0193 (JP)**

(74) Representative: **Winter, Brandl, Fürniss, Hübner, Röss, Kaiser, Polte - Partnerschaft**
**Alois-Steinecker-Strasse 22**
**85354 Freising (DE)**

(56) References cited:
**WO-A1-2004/014962**
**WO-A1-2004/072126**
**WO-A1-2004/096870**
**JP-A- 2004 323 693**
**JP-A- 2005 126 459**
**JP-A- 2005 344 009**
**JP-A- 2006 225 524**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 009 030 B1

## Description

TECHNICAL FIELD

The present invention relates to a resin composition produced by a living radical polymerization using an organotellurium compound, and a heat-resistant pressure sensitive adhesive by use thereof.

The invention also relates to a surface protection film comprising a substrate and formed thereon an adhesive layer that consists of the above-mentioned pressure sensitive adhesive, the adhesive layer being excellent in heat resistance and wetting ability.

The invention further relates to an optical film comprising a substrate and an adhesive layer that consists of the above-mentioned pressure sensitive adhesive formed thereon, the adhesive layer being excellent in durability.

BACKGROUND ART

So far, copolymers of combination of various kinds of monomers have been used as a resin composition for pressure sensitive adhesives. They have respective features of two or more kinds of each monomer compared with the polymer made from a single monomer, and in addition there is a possibility that a copolymer functioning only through said combination will be obtained. Although the usual free radical polymerization method is applied in manufacturing these copolymers, it is difficult to control the molecular weight and to keep the homogeneity of copolymer composition in case of using the free radical polymerization method. As a result, the generation of low molecular weight ingredients (oligomer) and homopolymer is caused. When these ingredients are contained in a pressure sensitive adhesive, the decrease of heat resistance in use and stain of adherend surface by the adhesive residue at the time of removal are known, and it is requested to eliminate these ingredients as much as possible.

Moreover, a surface protection film is usually used on non-adhering faces of optical films of a polarizing film, a retardation film and light guide plate, on electronic product surfaces of a semiconductor board and a flexible printed circuit, on paint side of a car, and on surfaces of decorative board, so that it may not be stained with a crack, dirt and so on during the transportation and the processing. When the surface protection films become unnecessary, they are removed and discarded after a process end or out of use. In order to make the adhesive strength weak at the time of peeling (peel strength) and to make stain of the adherend surface small after peeling, it is well known to copolymerize a condensation component such as methyl methacrylate in a pressure sensitive adhesive. Since the glass transition point of such a surface protection film becomes high, wetting ability to an adherend becomes bad, so that lifting or flagging from adherend surface tend to occur during a processing and transportation. Therefore, as for a pressure sensitive adhesive for surface protection films, it is required not to soil adherend surface and to have the wetting ability to an adherend. Further, when a high temperature treatment process is included in a machining process, there are problems that the pressure sensitive adhesive deteriorates by the high temperature, it adheres to adherend firmly, the separation becomes difficult after a process end, and that even separated, a pressure sensitive adhesive remains at the surface of products and stains the product. Therefore, heat resistance is also required of a pressure sensitive adhesive for surface protection films.

Moreover, an optical film used for a liquid crystal display such as a polarizing film or a retardation film and so on is stuck on a liquid crystal cell by use of a pressure sensitive adhesive. Since shrinkage of materials used for optical components is large under a heating condition and a humidification condition, the lifting or flagging tend to be caused after attachment. Therefore, the workable durability under heating condition and humidification condition is required for a pressure sensitive adhesive used for optical component material. Moreover, in case the extraneous substance enters the patched surface, or it sticks with a position gap at the time of attachment of a component accidentally, an optical component is removed from a liquid crystal cell, and then is reused. In case such an optical component is removed from a liquid crystal cell, it is requested to keep an adhesion state that the gap of a liquid crystal cell does not change or it is not broken. Thus removability of optical components that they can be easily removed is needed. However, when the technique of improving an adhesion state, focusing just on the durability of the pressure sensitive adhesive for optical component material, is adopted, the removability deteriorates.

Various kinds of materials are proposed as pressure sensitive adhesives usable for such an optical component materials. For example, the trial is conducted of improving the stress relaxation property of pressure sensitive adhesives by blending low molecular weight polymer with high molecular weight polymer (patent literature 1).

However, addition of a low molecular weight product causes the stain of an adherend at the time of removal from polarizing film and the decline of the maintenance force, and lifting and flagging tend to appear by the passage of time.

Therefore, stress relaxation property is required in addition to the durability of the pressure sensitive adhesives for an optical film that can respond under the above-mentioned conditions.

The living polymerization method, by which the well-controlled polymers are obtained, can be considered as a means to eliminate the low molecular weight ingredient (oligomer) and the ingredient of homopolymer that cause the

decline of the heat resistance under the environment in use and the stain of adherend surface by the adhesive residue at the time of removal. The living anion polymerization method has been known as the typical method among the living polymerization methods for many years (see, for example, patent literatures 2 and 3). The living anion polymerization method represented by these methods is a polymerization method with the advantage that a polymer of a clear structural formula and single dispersibility can be synthesized and so on. However, since the catalyst may be inactivated easily by water, oxygen, etc., there are problems that the strict dehydration and purification of the solvents as well as the monomers used for polymerization are requested and the extremely severe conditions for polymerization such as the ultra low temperature (-78 °C) and the ultra low pressure ($10^{-8}$ mmHg) are essentially required, and there is also a problem that the kinds of applicable monomers are limited.

The living radical polymerization is the polymerization method, which enables precise control of molecule structure, while maintaining the simplicity and flexibility of radical polymerization, and demonstrates big power for the syntheses of new polymer materials. There are a method using a transition metal catalyst (ATRP), a method using the reversible addition fragmentation chain transfer agent (RAFT) of a sulfur compound, and the other methods in this polymerization method depending on the difference in a technique that stabilizes a terminal end of polymerization chain.

As for these polymerization systems, owing to a lot of active research works about many kind of monomers, such as styrene monomers, methacrylate monomers and acrylate monomers and so on, it has come to be known widely that the primary structure of the polymer can be controlled somewhat precisely. However, since the reactivity is different greatly depending on the respective monomers, it cannot become a polymerization method applicable to every monomer.

Moreover, in the method using a transition metal catalyst, it is difficult to completely remove metals from a resin composition, such as copper used as a catalyst. When it is used as a pressure sensitive adhesive in an electronic material, such problems as an incorrect operation may be caused, because of existence of the residual metal. And in the method using the reversible chain transfer agent of a sulfur system, it is difficult to remove the sulfur compound at a polymer terminal end which acts as a reversible addition fragmentation chain transfer agent. When it remains, coloring and a bad smell occur, and when used as a pressure sensitive adhesive for an optical use, light transmissivity decreases, and when used for a medical use, such problems as the discomfort by the bad smell and so on may be considered.

The present inventors have reported a living radical polymerization in which the organotellurium compound is used as an initiator, as the examples of the living radical polymerization (see, for example, patent literatures 4 and 5).

The method using an organotellurium compound has the advantages that it is applicable to comparatively wider range of monomers than those of other methods, removal of the remaining tellurium metal is high at efficiency as compared with the method using a transition metal catalyst, less chain transfer reaction compared with the method using the reversible chain transfer agent of a sulfur system, it is excellent in molecular weight control property and easy in a modification of a polymer terminal end and so on.

Moreover, the present inventors made it possible to control the cross-linking degree of the resin composition produced by the living radical polymerization by use of the above-mentioned organotellurium compound. And they applied the resin composition, in which the cross-linking degree is well controlled, to the adhesive layer of a pressure sensitive adhesive film, and found that said pressure sensitive adhesive film has an adhesive layer which is excellent in wetting ability, heat resistance, durability, release property and stress relaxation property.

[patent literature 1] JP3272921B
[patent literature 2] JP1998-298248A
[patent literature 3] JP1999-255812A
[patent literature 4] WO 2004/14848
[patent literature 5] WO 2004/14962

An object of the invention is to provide a resin composition which is excellent in heat resistance, less in metal content and non-colored, and a pressure sensitive adhesive by use thereof.

Another object of the invention is to provide a surface protection film having an adhesive layer which is excellent in heat resistance and wetting ability.

Another object of the invention is to provide an optical film having an adhesive layer that is excellent in durability.

DISCLOSURE OF THE INVENTION

The present invention relates to the following inventions:

1. A resin composition containing a copolymer which is obtained by copolymerizing 80 to 99.9 parts by weight of a vinyl monomer mainly containing a (meth)acrylic acid alkyl ester and 0.1 to 20 parts by weight of a vinyl monomer having a reactive functional group by living radical polymerization, while using, as a polymerization initiator, one of the following: (a) to (d),

(a) an organotellurium compound of the formula (1);
(b) a mixture of an organotellurium compound of the formula (1) and an azo polymerization initiator;
(c) a mixture of an organotellurium compound of the formula (1) and an organoditellurium compound of the formula (2); and
(d) a mixture of an organotellurium compound of the formula (1), an azo polymerization initiator and an organoditellurium compound of the formula (2),

and which is further characterized in that the metal content in the composition is not more than 1000 ppm

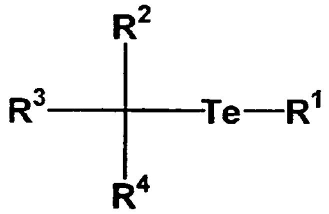

(1)

wherein $R^1$ is $C_1$-$C_8$ alkyl, aryl group, substituted aryl or aromatic heterocyclic group; $R^2$ and $R^3$ are respectively a hydrogen atom or $C_1$-$C_8$ alkyl; and $R^4$ is aryl, substituted aryl, aromatic heterocyclic group, acyl, amide, oxycarbonyl or cyano

$(R^1Te)_2$ (2)

wherein $R^1$ is as defined above.
2. A resin composition defined above wherein PD value of the copolymer is 1.05 to 2.00.
3. A resin composition defined above wherein the metal content is not more than 200 ppm.
4. A pressure sensitive adhesive comprising the resin composition defined above.
5. A pressure sensitive adhesive which comprises admixing 0.1 to 10 parts by weight of cross-linking agent with 100 parts by weight of the resin composition defined above and wherein the gel fraction rate after a cross-linking reaction is more than 80 wt %.
6. A pressure sensitive adhesive film characterized by forming the pressure sensitive adhesive defined above on a film substrate.
7. A surface protection film obtained by forming adhesive layer of the pressure sensitive adhesive defined above on a substrate of a surface protection film.
8. An optical film obtained by forming adhesive layer of the pressure sensitive adhesive defined above on a substrate of an optical film.

The organotellurium compounds used in the present invention is represented by the formula (1)

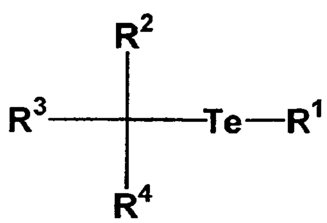

(1)

wherein $R^1$ is $C_1$-$C_8$ alkyl, aryl, substituted aryl or an aromatic heterocyclic group, $R^2$ and $R^3$ are each a hydrogen atom or $C_1$-$C_8$ alkyl, and $R^4$ is aryl, substituted aryl, an aromatic heterocyclic group, acyl, amido, oxycarbonyl or cyano.
Examples of groups represented by $R^1$ are as follows.
Examples of $C_1$-$C_8$ alkyl groups are straight-chain, branched chain or cyclic alkyl groups having 1 to 8 carbon atoms, such as methyl, ethyl, n-propyl, isopropyl, cyclopropyl, n-butyl, sec-butyl, tert-butyl, cyclobutyl, n-pentyl, n-hexyl, n-heptyl and n-octyl. Preferable alkyl groups are straight-chain or branched-chain alkyl groups having 1 to 4 carbon atoms. Methyl, ethyl or n-butyl is more preferable.
Examples of aryl groups are phenyl and naphthyl. Phenyl is preferable. Examples of aryl groups having a substituent are phenyl having a substituent and naphthyl having a substituent.

Examples of substituents of aryl groups having a substituent are a halogen atom, hydroxyl, alkoxyl, amino, nitro, cyano, carbonyl-containing groups represented by $-COR^a$ ($R^a = C_1$-$C_8$ alkyl, aryl, $C_1$-$C_8$ alkoxyl or aryloxy), sulfonyl, trifluoromethyl, etc.

Preferable is trifluoromethyl-substituted phenyl.

Preferably such substituted groups have one or two substituents at the para-position or ortho-position.

Examples of aromatic heterocyclic groups are pyridyl, pyrrol, furyl and thienyl.

Examples of groups represented by $R^2$ and $R^3$ are as follows.

Examples of $C_1$-$C_8$ alkyl groups are the same as the alkyl groups represented by $R^1$ and given above.

Examples of groups represented by $R^4$ are as follows.

Examples of aryl, substituted aryl, aromatic heterocyclic groups are the same as those groups represented by $R^1$ and given above.

Examples of acyl groups are formyl, acetyl and benzoyl.

Examples of amido groups are acetamido, malonamido, succinamido, maleamido, benzamido, 2-furamido and like carbonamido, thioacetamido, hexanedithioamido, thiobenzamido methanethiosulfonamido and like thioamido, selenoacetamido, hexanediselenoamido, selenobenzamido methaneselenosulfonamido and like selenoamido, N-methylacetamido, benzanilido, cyclohexanecarboxyanilido, 2,4'-dichloroacetanilido and like N-substituted amido.

Examples of preferred oxycarbonyl groups are those represented by $-COOR^b$ ($R^b$ = H, $C_1$-$C_8$ alkyl or aryl) such as carboxyl, methoxycarbonyl, ethoxycarbonyl, propoxycarbonyl, n-butoxycarbonyl, sec-butoxycarbonyl, tert-butoxycarbonyl, n-pentoxycarbonyl and phenoxycabonyl. Methoxycarbonyl and ethoxycarbonyl are more preferable oxycarbonyl groups.

Examples of preferred groups represented by $R^4$ are aryl, substituted aryl, oxycarbonyl and cyano. The aryl group is preferably phenyl. Examples of preferred substituted aryl groups are phenyl substituted with a halogen atom and phenyl substituted with trifluoromethyl. When the substituent is a halogen, the phenyl is substituted with preferably one to five halogen atoms. In the case of alkoxyl or trifluoromethyl, preferably one or two substituents are present. When having one substituent, the group is substituted preferably at the para- or ortho-position. When the group has two substituents, the meta-positions are preferred. Examples of preferred oxycarbonyl groups are methoxycarbonyl and ethoxycarbonyl.

Examples of preferred organotellurium compounds represented by the formula (1) are compounds wherein $R^1$ is $C_1$-$C_4$ alkyl or phenyl, $R^2$ and $R^3$ are each a hydrogen atom or $C_1$-$C_4$ alkyl, and $R^4$ is aryl, substituted aryl or oxycarbonyl. More preferable organotellurium compounds are those wherein $R^1$ is $C_1$-$C_4$ alkyl or phenyl, $R^2$ and $R^3$ are each a hydrogen atom or $C_1$-$C_4$ alkyl, and $R^4$ is phenyl, substituted phenyl, methoxycarbonyl or ethoxycarbonyl.

Examples of organotellurium compounds represented by the formula (1) are as follows.

Such organotellurium compounds are (methyltellanyl-methyl)benzene, (methyltellanyl-methyl) naphthalene, ethyl-2-methyl-2-methyltellanyl-propionate, ethyl-2-methyl-2-n-butyltellanyl-propionate, and the all of organotellurium compounds recited in patent literatures 3 and 4.

The organotellurium compounds of the formula (1) are not limited in the preparation method and are obtained by known processes such as those disclosed in patent literatures 3 and 4.

For example, the organotellurium compound represented by the formula (1) can be prepared by reacting a compound of the formula (3), a compound of the formula (4) and metallic tellurium.

Examples of compounds represented by the formula (3) are as follows

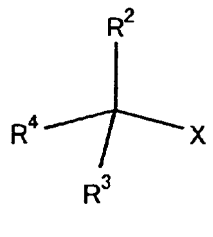

(3)

wherein $R^2$, $R^3$ and $R^4$ are as defined above, and X is a halogen atom.

Examples of groups represented by X can be a halogen atom such as fluorine, chlorine, bromine or iodine. Chlorine and bromine are preferable.

$$M(R^1)m \qquad (4)$$

wherein $R^1$ is as defined above, M is an alkali metal, alkaline earth metal or copper atom, and m is 1 when M is an alkali metal, m is 2 when M is an alkaline earth metal, or m is 1 or 2 when M is a copper atom.

Examples of metals represented by M are lithium, sodium, potassium and like alkali metals, magnesium, calcium

and like alkaline earth metals, and copper. Lithium is desirable.

In case that M is magnesium, the compound (4) may either be $Mg(R^1)_2$ or a compound represented by MgX (X is a halogen atom) which is a Grignard reagent. Chlorine and bromine are preferable.

The organoditelluride compounds represented by the formula (2) are represented by the formula (2)

$$(R^1Te)_2 \qquad (2)$$

wherein $R^1$ is the same as above.

The groups $R^1$ is the same as shown above.

Examples of preferred compounds represented by the formula (2) are those wherein $R^1$ is $C_1$-$C_4$ alkyl or phenyl.

More specific examples of compounds represented by the formula (2) are dimethyl ditelluride, diethyl ditelluride, di-n-propyl ditelluride, diisopropyl ditelluride, dicyclopropyl ditelluride, di-n-butyl ditelluride, di-sec-butyl ditelluride, di-tert-butyl ditelluride, dicyclobutyl ditelluride, diphenyl ditelluride, bis(p-methoxyphenyl) ditelluride, bis(p-aminophenyl) ditelluride, bis(p-nitrophenyl) ditelluride, bis(p-cyanophenyl) ditelluride, bis(p-sulfonylphenyl) ditelluride, dinaphthyl ditelluride, dipyridyl ditelluride, etc. Preferable among these are dimethyl ditelluride, diethyl ditelluride, di-n-propyl ditelluride, di-n-butyl ditelluride and diphenyl ditelluride.

The (meth)acrylate to be used as a main component in the present invention is not particularly limited. These are used singly or at least two of them in combination. Examples thereof are methyl (meth)acrylate, ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meth)acrylate, n-hexyl (meth)acrylate, cyclohexyl (meth)acrylate, n-octyl (meth)acrylate, isooctyl (meth)acrylate, 2-ethylhexyl (meth)acrylate, n-nonyl (meth)acrylate, isononyl (meth)acrylate, decyl (meth)acrylate, isodecyl (meth)acrylate, n-lauryl (meth)acrylate, n-stearyl (meth)acrylate, benzyl (meth)acrylate, phenyl (meth)acrylate, bornyl (meth)acrylate and isobornyl (meth)acrylate.

Preferable examples thereof are methyl acrylate, ethyl acrylate, n-propyl acrylate, isopropyl acrylate, n-butyl acrylate, isobutyl acrylate, s-butyl acrylate, t-butyl acrylate, n-hexyl acrylate, n-octyl acrylate, isooctyl acrylate, 2-ethylhexyl acrylate, n-nonyl acrylate, isononyl acrylate, decyl acrylate, isodecyl acrylate, n-lauryl acrylate and n-stearyl acrylate.

Particularly preferable examples thereof are those usually used in an acrylic pressure sensitive adhesive such as n-butyl acrylate, isobutyl acrylate, s-butyl acrylate, t-butyl acrylate, n-hexyl acrylate, n-octyl acrylate, isooctyl acrylate, 2-ethylhexyl acrylate, n-nonyl acrylate and isononyl acrylate.

As to the vinyl monomers having reactive functional group usable in the present invention, those having reactive functional group, such as hydroxyl group, carboxyl group, glycidyl group, isocyanate group and the like in the molecule may be used without particular limitation. One kind or at least two kinds of them are used to the (meth)acrylic acid ester as the main components.

For example, the followings can be exemplified.

Examples of the vinyl monomers having hydroxyl group are aromatic monomers such as p-hydroxystyrene; hydroxyalkyl C4-12 alkyl esters of (meth)acrylic acid such as 2-hydroxyethyl (meth)acrylate, 3-hydroxypropyl (meth) acrylate, 2-hydroxypropyl (meth)acrylate, 4-hydroxybutyl (meth)acrylate, 8-hydroxyoctyl (meth)acrylate and 12-hydroxylauryl (meth)acrylate; polyethylene glycol derivatives of (meth)acrylic acid ; caprolactone adduct of (meth)acrylic acid; vinyl ether derivatives such as hydroxymethyl vinyl ether, hydroxyethyl vinyl ether and hydroxypropyl vinyl ether; vinyl ketone derivatives such as hydroxymethyl vinyl ketone, hydroxyethyl vinyl ketone and hydroxypropyl vinyl ketone.

Preferable vinyl monomers having hydroxyl group are p-hydroxystyrene, 2-hydroxyethyl (meth)acrylate, 3-hydroxypropyl (meth)acrylate, 4-hydroxybutyl (meth)acrylate and polyethylene glycol derivatives of (meth)acrylic acid which are generally easily available.

Examples of the vinyl monomers having carboxyl group are (meth)acrylic acid, maleic acid, fumaric acid, itaconic acid, citraconic acid, crotonic acid and maleic anhydride, etc. Preferable vinyl monomer having carboxyl group is (meth) acrylic acid. Further, exemplified as the vinyl monomers having reactive functional group are vinyl monomers having epoxy group such as glycidyl (meth)acrylate, vinyl monomers having isocyanate group such as 2-methacroyloxyethylisocyanate, vinyl monomers having vinyl group such as divinylbenzene and triethylene glycol dimethacrylate, vinyl monomers having sulfonic acid group such as 2-acrylamide-2-methylpropane sulfonic acid, vinyl monomers having phosphoric acid group such as 2-hydroxyethylacryloyl phosphate.

Preferable examples of vinyl monomers having reactive group are vinyl monomers having hydroxyl group, vinyl monomers having carboxyl group, vinyl monomers having glycidyl group and vinyl monomers having isocyanate group. Moreover, pressure sensitive adhesive without any cross-linking agent may be produced by use of the polymers obtained by using together vinyl monomer having hydroxyl group or carboxyl group with vinyl monomer having glycidyl group or isocyanate group in parallel, because they are able to cross-link themselves without addition of a catalyst, heat treatment, etc.

The vinyl monomers having hydroxyl group have good stability under preservation situation and are not influenced adversely by acid under use environment, and therefore especially preferable.

Moreover, the vinyl monomer illustrated below may be copolymerized for the purpose of a control of cohesion or adhesion properties of a pressure sensitive adhesive, etc. as required in the present invention.

N,N-Dimethylaminopropyl(meth)acrylamide, N,N-dimethylaminoethyl(meth)acrylamide, 2-(dimethylamino) ethyl (meth)acrylate, N,N-dimethylaminopropyl (meth)acrylate and like vinyl monomers containing a tertiary amine, N-2-hydroxy-3-acryloyloxypropyl-N,N,N-trimethylammonium chloride, N-methacryloylaminoethyl-N,N,N-dimethylbenzylammonium chloride and like vinyl monomers containing quaternary ammonium base, styrene, $\alpha$-methylstyrene, 4-methylstyrene, 2-methylstyrene, 3-methylstyrene, 4-methoxystyrene, 2-hydroxymethylstyrene, 2-chlorostyrene, 4-chlorostyrene, 2,4-dichlorostyrene, 1-vinylnaphthalene, divinylbenzene, p-styrenesulfonic acid or an alkali metal salt thereof (sodium salt or potassium salt, etc.) and like aromatic vinyl monomers (styrene type monomer), 2-vinylthiophene, N-methyl-2-vinylpyrrole and like vinyl monomers containing a heterocyclic ring, N-vinylformaldehyde, N-vinylacetamide and like vinylamides, 1-hexene, 1-octene, 1-decene and like $\alpha$-olefins, butadiene, isoprene, 4-methyl-1,4-hexadiene, 7-methyl-1,6-octadiene and like dienes, methyl vinyl ketone, ethyl vinyl ketone and like vinyl monomers containing carbonyl group, vinyl acetate, vinyl benzoate, (meth)acrylonitrile, (meth)acrylamide, N-methyl (meth)acrylamide, N-isopropyl (meth)acrylamide, N,N-dimethyl (meth)acrylamide and like (meth)acrylamide type monomers, vinyl chloride, etc.

The term "(meth)acrylic acid" refers collectively to "acrylic acid" and "methacrylic acid."

Although the vinyl monomer and the compound represented by the formula (1) are used in amounts which are suitably adjusted depending on the molecular weight and molecular weight distribution of the living radical polymer to be obtained, usually 10 to 20,000 moles, preferably 50 to 10,000 moles, of the vinyl monomer is used per mole of the compound represented by the formula (1).

In the invention, an azo type polymerization initiator may be usable in order to accelerate polymerization velocity. The azo type polymerization initiator is not particularly limited insofar as it is usable in a usual radical polymerization. Example thereof are 2,2'-azobis-isobutyronitrile (AIBN), 2,2'-azobis(2-methylbutyronitrile) (AMBN), 2,2'-azobis(2,4-dimethylvaleronitrile) (ADVN), 1,1'-azobis(1-cyclohexanecarbonitrile) (ACHN), dimethyl-2,2'-azobisisobutyrate (MAIB), 4,4'-azobis(4-cyanovaleric acid) (ACVA), 1,1'-azobis(1-acetoxy-1-phenylethane), 2,2'-azobis(2-methylbutylamide), 2,2'-azobis(4-methoxy-2,4-dimethylvaleronitrile), 2,2'-azobis(2-methylamidinopropane) dihydrochloride, 2,2'-azobis[2-(2-imidazoline-2-yl)propane], 2,2'-azobis[2-methyl-N-(2-hydroxyethyl)propionamide], 2,2'-azobis(2,4,4-trimethylpentane), 2-cyano-2-propylazoformamide, 2,2'-azobis(N-butyl-2-methylpropionamide) and 2,2'-azobis(N-cyclohexyl-2-methylpropionamide).

These azo type polymerization initiators are preferably selected depending on the reaction conditions. For example, in case of low temperature (below 40 °C) polymerization, preferable are 2,2'-azobis(2,4-dimethylvaleronitrile) (ADVN) and 2,2'-azobis(4-methoxy-2,4-dimethylvaleronitrile). In case of middle temperature (40 to 80 °C) polymerization, preferable are 2,2'-azobis-isobutyronitrile (AIBN), 2,2'-azobis(2-methylbutyronitrile) (AMBN), dimethyl-2,2'-azobisisobutyrate (MAIB), 1,1'-azobis(1-acetoxy-1-phenylethane), 4,4'-azobis(4-cyanovaleric acid) (ACVA), 2,2'-azobis(2-methylbutylamide), 2,2'-azobis(2-methylamidinopropane) dihydrochloride and 2,2'-azobis[2-(2-imidazoline-2-yl)propane]. In case of high temperature (above 80 °C) polymerization, preferable are 1,1'-azobis(1-cyclohexanecarbonitrile) (ACHN), 2-cyano-2-propylazoformamide, 2,2'-azobis(N-butyl-2-methylpropionamide), 2,2'-azobis(N-cyclohexyl-2-methylpropionamide), 2,2'-azobis(2,4,4-trimethylpentane) and 2,2'-azobis[2-methyl-N-(2-hydroxyethyl)propionamide].

The compound represented by the formula (1) and the azo type polymerization initiator are used in the ratio of usually 0.01 to 100 moles, preferably 0.1 to 10 moles, especially preferably 0.1 to 5 moles, of the azo type polymerization initiator per mole of the compound of the formula (1).

In case of the compound of the formula (1) and the compound of the formula (2) are used, usually 0.01 to 100 moles, preferably 0.05 to 10 moles, especially preferably 0.1 to 5 moles of the compound of the formula (2) is used per mole of the compound of the formula (1).

In case of the compounds of the formulas (1) and (2), and the azo type polymerization initiator are used, usually 0.01 to 100 moles, preferably 0.1 to 10 moles, especially preferably 0.1 to 5 moles of the azo type polymerization initiator is used per mole of the total of the compounds of the formulas (1) and (2).

The polymerization reaction is carried out usually in the absence of solvent, while an organic solvent generally in use for radical polymerization or an aqueous solvent may be used. Examples of organic solvents usable are benzene, toluene, N,N-dimethylformamide (DMF), dimethyl sulfoxide (DMSO), acetone, 2-butanone (methyl ethyl ketone), dioxane, hexafluoroisopropanol, chloroform, carbon tetrachloride, tetrahydrofuran (THF), ethyl acetate, trifluoromethylbenzene, etc. Examples of aqueous solvents are water, methanol, ethanol, isopropanol, n-butanol, ethyl cellosolve, butyl cellosolve, 1-methoxy-2-propanol, diacetonealcohol, etc. The amount of the solvent to be used is adjusted suitably. For example, 0.01 to 50 ml, preferably 0.05 to 10 ml, more preferably 0.1 to 1 ml, of the solvent is used per gram of the vinyl monomer.

Next, the mixture is then stirred. The reaction temperature and the reaction time may be adjusted suitably in accordance with the molecular weight or molecular weight distribution of the living radical polymer to be obtained. The mixture is stirred usually at 0 to 150 °C for 1 minute to 100 hours, preferably at 20 to 100 °C for 0.1 to 30 hours. The mixture is stirred more preferably at 20 to 80 °C for 0.1 to 15 hours. Thus, the present invention has a feature that a high

yield and precise molecular distribution are performed even at such a low polymerization temperature and short period of polymerization time. The reaction is carried out usually under atmospheric pressure, but may be carried out under increased pressure or in a vacuum.

After the completion of the reaction, the solvent used and the remaining monomer are removed in a vacuum to take out the desired polymer, or the desired polymer is isolated by re-precipitation using a solvent wherein the polymer is insoluble. The reaction mixture can be treated by any method insofar as it causes no problem to the desired polymer.

Since the organotellurium compound used as an initiator in the invention is stable to water, the present composition can be prepared by an aqueous polymerization process disclosed in the patent literature 6 below, etc.

Namely, it is possible to use the emulsion polymerization process wherein a surfactant is used to carry out polymerization mainly in a micelle. When required, a dispersant of water-soluble high polymer, such as a polyvinyl alcohol, may be used. Such surfactants are usable singly, or at least two of them can be used in combination. The surfactant is used preferably in an amount of 0.3 to 50 parts by weight, more preferably 0.5 to 50 parts by weight, per 100 parts by weight of all monomers. Water is used preferably in an amount of 50 to 2000 parts by weight, more preferably 70 to 1500 parts by weight, per 100 parts by weight of all monomers. The polymerization temperature is preferably in the range of 0 to 100 °C, more preferably 40 to 90 °C, although not limited particularly. The reaction time is suitably determined so as to complete the polymerization reaction, for example, in accordance with the reaction temperature, or with the monomer composition to be used and the kind of surfactant and polymerization initiator. The reaction time is preferably within 24 hours.

According to the invention, the suspension polymerization process is also usable in which a dispersant is used to conduct polymerization generally without using any micelle. Also usable along with the dispersant are auxiliary dispersants such as sodium chloride, potassium chloride, sodium sulfate, potassium sulfate and manganese sulfate when so required. Such stabilizers for dispersion in water are used preferably in an amount of 0.01 to 30 parts by weight, more preferably 0.05 to 10 parts by weight, and most preferably 0.1 to 5 parts by weight, per 100 parts by weight of the monomers. Water is used preferably in an amount of 50 to 2000 parts by weight, more preferably 70 to 1500 parts by weight, per 100 parts by weight of the monomers. The polymerization temperature is preferably in the range of 0 to 100 °C, more preferably 40 to 90 °C, although not limited particularly. The reaction time is suitably determined so as to complete the polymerization reaction, for example, in accordance with the reaction temperature, or with the monomer composition to be used and the kind of water dispersion stabilizer and polymerization initiator. The reaction time is preferably within 24 hours.

The miniemulsion polymerization process is further usable according to the invention. The monomer is forcibly dispersed using a surfactant and cosurfactant and also using a homogenizer or ultrasonic device, but generally without using any micelle. Such surfactant and cosurfactant are used in an amount of 0.3 to 50 parts by weight, preferably 0.5 to 50 parts, based on all the monomers. The ultrasonic irradiation time is 0.1 to 10 minutes, preferably 0.2 to 5 minutes.

[patent literature 6] JP2005-041321 (application number)

Since the present copolymer is prepared by a living radical polymerization process, when two kinds of vinyl monomers are reacted in succession, a block copolymer can be obtained. The block copolymer is provided by the same order of reacted monomers regardless of the kinds of the monomers. When a vinyl monomer A and a vinyl monomer B are reacted to obtain a block copolymer, the polymer is obtained in the order of A-B or B-A in conformity with the order of monomers reacted. Also a triblock copolymer or a pentablock copolymer such as A-B-A and A-B-C-B-A can be obtained.

The preparation of each block may be followed directly by the subsequent reaction for the next block, or the subsequent reaction for the next block may be initiated after the purification of the product resulting from the completion of the first reaction. The block copolymer can be isolated by a usual method.

The copolymer to be obtained by the invention is adjustable in molecular weight according to the reaction time and the amounts of the compound of the formulas (1) and (2), and can be 1,000 to 2,000,000 in weight average molecular weight. The invention is especially suitable for producing copolymers having a weight average molecular weight of 5,000 to 1,000,000.

When the resin composition of this invention is used for a pressure sensitive adhesion film, it is preferable to use a copolymer having weight average molecular weight of 300,000 to 2,000,000, and more preferably of 400,000 to 1,000,000. In case it has a weight average molecular weight of less than 300,000, cohesion strength may be insufficient, a heat-resistance is decreased, and therefore it may stain the adherend surface. In case more than 2,000,000, the reaction velocity may become slow, the productivity would decrease, and the controllability also may become worse since a radical concentration of the terminal growth may be lowered.

The molecular weight distribution (PD=Mw/Mn) of the living radical polymer obtained by the present invention is controlled at 1.05 to 2.00. Furthermore, a polymer with molecular weight distribution of such as 1.05 to 1.90 and even a narrower molecular weight distribution of 1.05 to 1.80 can be obtained.

When an organotellurium compound of the formula (1) or formula (2) is used as an initiator, a tellurium atom

may remain at the terminal end of the polymer in a form of -TeR$^1$ (R$^1$ is the same as the above).

A polymer in which a tellurium atom remains at the terminal end is colored. Tellurium is a metallic atom, and the metal content including the residual tellurium atom is preferably less than 1000 ppm, and especially less than 200 ppm in the whole resin, from the view point of the improvement at the transparency and the prevention from inclusion of extraneous substances to the pressure sensitive adhesive combined with the obtained copolymer.

After a polymerization reaction, the tellurium atom which remains at terminal ends of the molecule is removed by a radical reduction method by use of tributylstannane or thiol compound, furthermore, an adsorbing method by use of activated carbon, silica gel, activated alumina, activated clay, molecular sieves, high molecular polymer or the like, a method of absorbing metal by use of an ion-exchange resin or the like, moreover, addition of peroxides such as aqueous hydrogen peroxide, benzoyl peroxide, and oxidative degradation of the tellurium atom at the terminal end of the polymer by blowing air or oxygen into the system, a removal of the remaining tellurium compound by combining with water or a suitable solvent such as liquid-liquid extraction method or solid-liquid extraction method, a purification method in solution states such as ultra filtration which extracts and removes only compounds having less than a specific molecular weight, and further, these methods may also be combinable.

Although the resin composition of the invention can also be used as a pressure sensitive adhesive as it is, it is desirable to add a cross-linking agent that reacts reactive functional groups in the resin composition from the point of improvement at the cohesion strength and heat resistance thereof.

Examples of the cross-linking agents are isocyanate compounds, epoxy compounds, amine compounds, metal salts, metal alkoxides, metal chelate compounds, ammonium salts and hydrazine compounds.

Examples of isocyanate compounds are tolylenediisocyanate, 4,4'-diphenylmetanediisocyanate, hexamethylenediisocyanate, xylylenediisocyanate, m-xylylenediisocyanate, 1,5-naphthalenediisocyanate, hydrogenated diphenylmetanediisocyanate, hydrogenated tolylenediisocyanate, hydrogenated xylylenediisocyanate, isophoronediisocyanate and like isocyanate compounds, SUMIDUR N (product of Sumitomo Bayer Urethane Co., Ltd.) and like burette polyisocyanate compounds, DESMODUR IL, DESMODUR HL (product of Bayer A.G.), CORONATE EH (product of Nippon Polyurethane Co., Ltd.) and like polyisocyanate compounds having isocyanurate ring, SUMIDUR L (product of Sumitomo Bayer Urethane Co., Ltd.) and like adduct polyisocyanate compounds, CORONATE HL (product of Nippon Polyurethane Co., Ltd.), CORONATE L (product of Nippon Polyurethane Co., Ltd.), CORONATE L55E (product of Nippon Polyurethane Co., Ltd.) and like adduct polyisocyanate compounds. Further, block isocyante can also be used.

Examples of epoxy compounds are epoxy resin of bisphenol A/epichlorohydrin type, ethylene glycol diglycidyl ether, polyethylene glycol diglycidyl ether, glycerin di- or tri-glycidyl ether, 1,6-hexanediol glycidyl ether, trimethylolpropanetri glycidyl ether, diglycidylaniline, diglycidylamine, N,N,N',N'-tetraglycidyl m-xylenediamine and 1,3-bis(N,N'-diglycidylaminomethyl)cyclohexane.

Examples of amine compounds are hexamethylenediamine, triethyldiamine, polyethyleneimine, hexamethylenetetramine, diethylenetriamine, triethylenetetramine, isophoronediamine, amine resin and melamine resin.

Examples of metal salts are chloride, bromide, nitrate, sulfate and acetate of multivalent metals such as aluminum, iron, copper, zinc, tin, titanium, nickel, antimony, magnesium, vanadium, chromium and zirconium. Examples thereof are cupric chloride, aluminum chloride, ferric chloride, stannic chloride, zinc chloride, nickel chloride, magnesium chloride, aluminum sulfate, copper acetate and chromium acetate.

Examples of metal alkoxides are tetraethyl titanate, tetraethyl zirconate and aluminum isopropionate. Examples of metal chelates are coordination compounds of multivalent metals such as aluminum, iron, copper, zinc, tin, titanium, nickel, antimony, magnesium, vanadium, chromium and zirconium coordinated with acetylacetone or acetoacetate.

Examples of ammonium salts are ammonium chloride, ammonium sulfate, ammonium acetate and ammonium propionate. Examples of hydrazine compounds are hydrazine, hydrazine hydrate, together with inorganic salts thereof, such as chloride, sulfate and phosphate, and organic acid salts thereof such as formate and oxalate.

The amount of cross-linking agent is preferably 0.1 to 10 parts by weight, and more preferably 0.5 to 5 parts by weight per 100 parts by weight of a resin composition. In case the amount is less than 0.1 part by weight, the cohesion strength becomes insufficient, and the amount is exceeded more than 10 parts by weight, the density of cross-linking becomes too much high, adhesive strength would decline, and hence undesirable.

Moreover, when preventing stain of adherend surface at the time of removal as in the protection film, the amount of the cross-linking agent is preferably 3 to 10 parts by weight, and more preferably 3 to 7 parts by weight per 100 parts by weight of the resin composition. When less than 3 parts by weight, the adherend surface may be stained, and over 10 parts by weight, the density of cross-linking becomes too much high, and the adhesion force may be declined, and undesirable.

Further, when the remaining stress by shrinkage of a substrate is to be relaxed as in the optical film, the amount of the cross-linking agent is preferably 0.1 to 3 parts by weight, and more preferably 0.5 to 3 parts by weight per 100 parts by weight of the resin composition. Less than 0.1 parts by weight, the cohesion strength may become insufficient, and more than 3 parts by weight, the density of cross-linking becomes too much high, and an ability of the stress relaxation would be declined, and undesirable.

However, since a block copolymer like tri-block copolymer of A-B-A described previously has a chemical cross-linking point based on the phase separation structure, as well as has a physical quasi-cross-linking point, since the block A forms a micro phase separation structure, and therefore it is not limited thereto.

Although the cross-linking temperature is suitably adjusted according to the kind of pressure sensitive adhesive compositions, and generally 70 to 150 °C is preferable The cross-linking time is preferably about 1 to 5 minutes.

Moreover, in order to accelerate the cross-linking between a resin composition and a cross-linking agent, it may be used, as required, a conventional catalyst such as organic tin, tertially amine, p-toluenesulfonic acid and benzenesulfonic acid. In case of epoxy compounds, a phosphoric acid catalyst such as triphenylphosphine can be used.

In the pressure sensitive adhesive composition of the invention, the gel content after drying or hardening is preferably more than 80 weight %, especially 80 to 95 weight %. An adhesive strength tends to increase and it is likely to remain paste at the time of separation when the gel content is less than 80 weight %.

In addition, the gel content in the invention means the value calculated by the following formula:

$$\text{Gel content (weight \%)} = (W2/W1) \times 100$$

Wherein W1 (g) is the dry weight of the pressure sensitive adhesive after hardening; W2 (g) is the weight when W1 (g) is extracted by ethyl acetate by use of Soxhlet extractor and then is recovered and dried.

To the pressure sensitive adhesive composition obtained by the present invention may also add other ingredients, as required. Examples of the additives are dyes, pigments, coloring materials, fluorescent whitening agents, moisture agents, surface tension adjusting agents, thickeners, antifungal agents, antiseptic agents, oxygen absorbents, ultraviolet absorbents, near-infrared absorbents, aqueous light absorbents, antioxidants, spices, metal inactivators, core constructing agents, antistatic agents, flame retardants, lubricants, processing additives and silane coupling agents. According to the use and the purpose of using the pressure sensitive adhesive, these are selected suitably, and used as admixed with the pressure sensitive adhesive composition or as laminated to the adhesive layer. It is preferable to add a silane coupling agent for adjusting adhesive strength in the invention.

Examples of silane coupling agents are vinyltriethoxysilane, vinyltris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyltrimethoxysilane, γ-aminopropyltriethoxysilane and N-β(aminoethyl)-γ-aminopropyltrimethoxysilane. Such silane coupling agents are usable singly, or at least two of them can be used in combination. The amount of the silane coupling agent in the invention is usually necessarily 0.01 to 5.0 parts by weight, and preferably 0.03 to 2.0 parts by weight to 100 parts by weight of the above-mentioned (meth)acrylic polymer (as solid).

The pressure sensitive adhesive film in this invention includes a substrate and an adhesive layer as a minimum component unit. An adhesive layer is formed in one side or both sides of the substrate.

The method of forming an adhesive layer in the pressure sensitive adhesive film in the invention is not particularly limited. For example, the pressure sensitive adhesive composition (solution) is applied to one side or both sides of the substrate and dried. Alternatively, the pressure sensitive adhesive composition is applied to a surface of a release liner having treated with a release agent, and is transferred to one side or both sides of the substrate after dried or dried with aging. In case that an adhesive layer is exposed on the film surface, it can be protected with a release liner until practically presented for use.

As to component materials of the mold liner, suitable thin layer materials, namely films of synthetic resin such as polyethylene, polypropylene and polyethylene terephthalate, rubber sheet, paper, cloth, non-woven fabric, net, foaming sheet, metal foil, and laminates thereof, can be used. Moreover, in order to enhance the separation property from an adhesive layer, silicon treatment, fluoride treatment or the like may be performed to the surface of a mold release liner, if needed.

Although the thickness (after dried) of an adhesive layer is not particularly limited, it is preferable to be about 5 to 40 μm.

A substrate used for the film in the invention is not particularly limited insofar as it is usable in a usual adhesion sheet. Example thereof are polyolefin resins such as polyethylene, polyester resins such as polyethylene terephthalate, vinyl chloride resins, vinyl acetate resins, polyimide resins, fluororesins, cellophane and like plastic films; multi layer films where a film obtained by adding polarization ingredients such as iodine or dichroic dye and the like to polyvinyl alcohol resin such as polyvinyl alcohol, polyvinyl formaline, polyvinyl acetal or a saponification product of ethylene and vinyl acetate copolymer, and extending the film, and then, for protection of the film, laminating a cellulose film such as cellulose triacetate, polycarbonate film or polyether sulfone film to form the multi layer film; papers such as Kraft paper and Japanese paper; cloths of textiles or non-woven fabrics, independent or mixed spinning originated from any of natural fibers, semi-synthetic fibers or synthetic fiber such as Manila hemp, pulp, rayon, acetate fiber, polyester fiber,

polyvinyl alcohol fiber, polyamide fiber and polyolefin fiber; rubber sheets of natural rubber, butyl rubber or the like; foamed sheets of foamed products consisting of polyurethane, polychloroprene rubber or the like; metal foils such as aluminum foil, copper foil or the like; complexes thereof.

As the substrate used for the surface protection film in the invention, plastic films such as polyethylene film and polyester film (polyethylene terephthalate film, etc.), can especially be used suitably. In addition, the substrate may be any of transparency, semi-transparency and opaque. Moreover, surface treatments such as corona processing may be applied to one side or both sides.

A substrate used for the optical film in the invention is not particularly limited insofar as it is usable in a usual liquid crystal display. Example thereof are a polarizing film, a retardation film such as multi layer films where a film obtained by adding polarization ingredients such as iodine to polyvinyl alcohol film, and extending the film, and then, for protection of the film, laminating a cellulose triacetate film to form the multi layer film.

The ball tack of the surface protection film of the present invention is desirably 5 to 20, and preferably 10 to 20 from a viewpoint of the wetting ability to a protecting object. In case a ball tack is less than 5, wetting ability to the adherend object becomes bad, and lifting and flagging from adherend surface would be easily caused during the processing and transportation. Further, in case a ball tack is more than 20, anchoring to the adherend object becomes high and the separation force becomes large.

The adhesive strength (180°peel strength to the adherend object [SUS304 mirror surface finish]) is 0.1 to 5N/25 mm, preferably 0.5 to 5N/25 mm from the viewpoint of workability at the time of removal and protection of the protective subject. Since adhesive strength is too small when adhesive strength is less than 0.1 N/25 mm, the lifting and flagging from the adherend surface may be easily caused during a processing or transportation. Moreover, in case adhesive strength is more than 5N/25 mm, a destruction of the protection subject may happen when the protecting subject is a thin layer object such as a printed circuit board.

By choosing suitably the molecular weight and the amount of a cross-linking agent as mentioned above, there appears neither air bubble nor flagging from the optical film of the present invention under heat-resistant examination conditions such as at 80 °C and for 500 hours and under moisture- and heat-resistant conditions such as at 60 °C, 90% RH and for 500 hours, and further it is excellent in stress relaxation property, therefore uneven coloring does not appear in the optical film.

The pressure sensitive adhesive of the invention is widely applicable to a tape, sheet, label, foil, etc. For example, the above-mentioned pressure sensitive adhesive is applied to a substrate such as films made from a synthetic resin or a modified natural product, paper, any kind of fabric, metal foil, metalized plastic foil, asbestos or a glass fiber cloth, etc., in the form of a solvent type, an emulsion type or a hot melt type, and is cured with an active energy beam or heat. As to concrete uses, it is extremely effective, for example, as a pressure sensitive adhesive for a masking tape for coating in construction use, a surface protection film at the time of transportation in automobile uses, an adhesion tape for electric insulation, a tape for semiconductor manufacturing processes for electric and electronic material uses, a tape for pasting optical films at a liquid crystal display in optical uses, pressure sensitive adhesive for plasters for endermic administration in medical uses, etc.

BEST MODE OF CARRYING OUT THE INVENTION

The present invention will be described below in detail with reference to Examples, but is not limited thereto in any way. In Examples and Comparative Examples, properties were determined by the following devices.
$^1$H-NMR : Bruker BIOSPIN, AVANCE 500 (500MHz)
Molecular weight and molecular weight distribution :
Gel permeation chromatography Japan Waters GPCV-2000
(Column : Tosoh, TSK GEL $GMH_{XL}$ + TSK-GEL Multipore $H_{XL}$-M, polystyrene Standard: Tosoh, TSK Standard)
Te content in polymer: ICP/MS

Preparation Example 1

<u>Preparation of ethyl-2-methyl-2-n-butyltellanyl-propionate</u>

A 6.38 g quantity (50 mmoles) of metallic tellurium [product of Aldrich, brand name: Tellurium (-40 mesh)] was suspended in 50 ml of THF, and 34.4 ml(55 mmoles) of n-butyllithium (product of Aldrich, 1.6 M hexane solution) was slowly added dropwise to the suspension at room temperature (for 10 minutes). The reaction mixture was stirred until the metallic tellurium disappeared completely (for 20 minutes). To the reaction mixture was added 10.7 g (55 mmoles) of ethyl-2-bromo-isobutyrate at room temperature, followed by stirring for 2 hours. After the completion of reaction, the solvent was concentrated in a vacuum, followed by vacuum distillation to give 8.98 g of yellow oil (59.5% in yield).
$^1$H-NMR analysis indicated that the product was ethyl-2-methyl-2-n-butyltellanyl-propionate.

$^1$H-NMR (500MHz, $CDCl_3$) 0.93(t, J=7.5Hz, 3H), 1.25(t, J=7.2Hz, 3H), 1.37(m, 2H), 1.74(s, 6H), 1.76(m, 2H), 2.90(t, J=7.5Hz, 2H, $CH_2Te$), 4.14(q, J=7.2Hz, 2H)

Example 1

[Poly(n-butyl acrylate)-co-poly(hydroxyethyl methacrylate)]

In a glove box with the inside air replaced by argon, 63.8 μ L (0.28 mmole) of ethyl 2-methyl-2-n-butyltellanyl-propionate prepared in Preparation Example 1, 154 mL (1.08 moles) of n-butyl acrylate [Tokyo Kasei Co., Ltd. after purification by distillation], 4 mL (32.9 mmoles) of 2-hydroxyethyl methacrylate [Sigma-Aldrich Japan K.K.] and 4.6 mg (0.03 mmole) of 2,2'-azobis(isobutyronitrile) [Otsuka Chemical Co., Ltd., brand name: AIBN] were reacted at 60 °C for 20 hours. NMR analysis indicated that the polymerization ratio was 94.4 %.
After the reaction, the reaction vessel was taken out from the glove box, then the reaction mixture was dissolved into 500 mL of ethyl acetate, and the resulting polymer solution was passed through a column produced by activated alumina [Wako Pure Chemical Ind., Ltd.]. Ethyl acetate was added until the viscosity of the polymer solution became 5000 mPa·S (25 °C). The resulting polymer solution contains 26.7 % of solid.
GPC analysis (with reference to the molecular weight of an authentic sample of polystyrene) revealed that the weight average molecular weight (Mw) was 713,400 and PD=1.52.
After drying of the polymer solution, treated by an ashing process and analyzed by ICP/MS, the metal content in a non-volatilized part was 154 ppm.
To 100 parts by weight (as solid) of this polymer solution, one part (as solid) of CORONATE L-55E [Nippon Polyurethane Ind. Co., Ltd., polyisocyanate compound, 55 % solid] as a cross-linking agent was added while stirring to give a pressure sensitive adhesive composition.
The resulting composition was applied on a PET film so that the thickness after drying to be 25 μm, and dried at 105 °C for 2 minutes to produce an adhesion film.

Example 2

To 100 parts by weight (as solid) of the polymer solution obtained in Example 1, 2 parts (as solid) of CORONATE L-55E (same as above) as a cross-linking agent was added while stirring to give a pressure sensitive adhesive composition.
The resulting composition was applied on a PET film so that the thickness after drying to be 25 μm, and dried at 105 °C for 2 minutes to produce an adhesion film.

Example 3

Preparation of [poly(n-butyl acrylate)-co-poly(hydroxyethyl methacrylate)] (Homogenization of cross-linking component distribution)

In a glove box with the inside air replaced by argon, 63.8 μ L (0.28 mmole) of ethyl-2-methyl-2-n-butyltellanyl-propionate prepared in Preparation Example 1, 154 mL (1.08 moles) of n-butyl acrylate [same as above], 1 mL (8.2 mmoles) of 2-hydroxyethyl methacrylate [same as above] and 4.6 mg (0.03 mmole) of 2,2'-azobis(isobutyronitrile) [same as above] were initiated to polymerize at 60 °C. When the total polymerization rate of the monomers increased to 30 %, 50 % and 70 %, was added each of 1 mL (8.2 mmole) of 2-hydroxyethyl methacrylate [same as above], respectively. The reaction was continued for 20 hours after the initiation of the polymerization. NMR analysis indicated that the polymerization ratio was 93.7 %. After the completion of the reaction, the reaction vessel was taken out from the glove box, the reaction mixture was dissolved into 500 mL of ethyl acetate, and the resulting polymer solution was passed through a column produced by activated alumina [Wako Pure Chemical Ind., Ltd.]. Ethyl acetate was added until the viscosity of the polymer solution became 5000 mPa·S (25 °C). The resulting polymer solution contains 24.2 % of solid.
GPC analysis (with reference to the molecular weight of an authentic sample of polystyrene) revealed that Mw was 776,800 and PD=1.60.
After drying of the polymer solution, treated by an ashing process and analyzed by ICP/MS, the metal content in a non-volatilized part was 194 ppm.
To 100 parts by weight (as solid) of this polymer solution, one part (as solid) of CORONATE L-55E [same as above] as a cross-linking agent was added while stirring to give a pressure sensitive adhesive composition.
The resulting composition was applied on a PET film so that the thickness after drying to be 25 μm, and dried at 105 °C for 2 minutes to produce an adhesion film.

Example 4

To 100 parts by weight (as solid) of the polymer solution obtained in Example 3, 2 parts (as solid) of CORONATE L-55E (same as above) as a cross-linking agent was added while stirring to give a pressure sensitive adhesive composition.

The resulting composition was applied on a PET film so that the thickness after drying to be 25 μm, and dried at 105 °C for 2 minutes to produce an pressure sensitive adhesive film.

Comparative Example 1

Poly(n-butyl acrylate)

In a glove box with the inside air replaced by argon, 61.6 μ L (0.35 mmole) of ethyl 2-methyl-2-n-butyltellanyl-propionate prepared in Preparation Example 1, 200 mL (1.4 moles) of n-butyl acrylate (same as above) and 5.8 mg (0.04 mmole) of 2,2'-azobis(isobutyronitrile) (same as above) were reacted at 60 °C for 46 hours. NMR analysis indicated that the polymerization ratio was 79.6 %.

After the reaction, the reaction vessel was taken out from the glove box, and unreacted monomer was removed by distillation under reduced pressure. Then the reaction mixture was dissolved into 500 mL of ethyl acetate, and the resulting polymer solution was passed through a column produced by activated alumina [Wako Pure Chemical Ind., Ltd.].

Ethyl acetate was added until the viscosity of the polymer solution became 5000 mPa·S (25 °C). The resulting polymer solution contains 33.3 % of solid.

GPC analysis (with reference to the molecular weight of an authentic sample of polystyrene) revealed that the weight average molecular weight (Mw) was 581,600 and PD=1.24.

After drying of the polymer solution, treated by an ashing process and analyzed by ICP/MS, the metal content in a non-volatilized part was 105 ppm.

The polymer solution was used as a pressure sensitive adhesive composition. The composition was applied on a PET film so that the thickness after drying to be 25 μm, and dried at 105 °C for 2 minutes to produce an pressure sensitive adhesive film.

Comparative Example 2

[Poly(n-butyl acrylate)-co-poly(hydroxyethyl methacrylate)]

A quantity of 154 mL (1.08 moles) of n-butyl acrylate [Tokyo Kasei Co., Ltd.], 4 mL (32.9 mmoles) of 2-hydroxyethyl methacrylate (same as above) and 214.3 mg (1.31 mmoles) of 2,2'-azobis(isobutyronitrile) (same as above) were reacted in 240 mL of ethyl acetate at 60 °C for 13 hours under nitrogen atmosphere. NMR analysis indicated that the polymerization ratio was 93.3 %.

After the reaction, ethyl acetate was added until the viscosity of the polymer solution became 5000 mPa·S (25 °C). The resulting polymer solution contains 28.3 % of solid.

GPC analysis (with reference to the molecular weight of an authentic sample of polystyrene) revealed that the weight average molecular weight (Mw) was 782,600 and PD=3.71.

To 100 parts by weight (as solid) of this polymer solution, one part (as solid) of CORONATE L-55E (same as above) as a cross-linking agent was added while stirring to give a pressure sensitive adhesive composition.

The resulting composition was applied on a PET film so that the thickness after drying to be 25 μm, and dried at 105 °C for 2 minutes to produce an pressure sensitive adhesive film.

Comparative Example 3

To 100 parts by weight (as solid) of the polymer solution obtained in Comparative Example 2, two parts (as solid) of CORONATE L-55E (same as above) as a cross-linking agent was added while stirring to give a pressure sensitive adhesive composition.

The resulting composition was applied on a PET film so that the thickness after drying to be 25 μm, and dried at 105 °C for 2 minutes to produce an adhesion film.

Test Example 1

Gel fraction rate, retention force test and adhesion force test were carried out by the following method for the pressure sensitive adhesive composition and the adhesion film obtained as mentioned above. The results were shown

in Table 1.

(Method of measuring gel fraction rate: A1)

The pressure sensitive adhesive compositions obtained in Examples 1 to 4 and Comparative Examples 1 to 3 were dried at 120 °C for 3 hours, and the weight W1 (about 500 mg) of the pressure sensitive adhesive composition after dried was measured and put into a cylinder type filter paper of the weight W0, and was extracted by 200mL of ethyl acetate in a vessel equipped with the Soxhlet extractor for 14 hours under reflux.
The cylinder type filter paper was taken out after the extraction test, and after dried at 80 °C for 8 hours at the reduced pressure, the weight W2 was measured and gel content was calculated by the following formula.

$$\text{Gel content} = [(W2-W0)/(W1-W0)] \times 100 \text{ (weight \%)}$$

(Method of measuring holding power: B1)

According to the method of measuring holding power of JIS Z 0237, the holding power of the above-mentioned pressure sensitive adhesive films were measured under the conditions of 40 °C, 80 °C, 100 °C and 120 °C , and estimated as follows.
◎- - With no gap after 1440 minutes
○- - Gap of less than 1 mm after 1440 minutes
Δ -- Falling between 60 minutes and 1440 minutes
x -- Falling at less than 60 minutes.

(Method of measuring adhesive strength: C1)

A stainless steel plate (SUS304) was prepared as an adherend object, the adhesion film mentioned above was pasted on the adherend object at 23 °C, RH 50%, and the 180 ° peeling force was measured according to the measuring method of an adhesion force of JIS Z 0237.

[Table 1]

| | | Example | | | | Com. Example | | |
|---|---|---|---|---|---|---|---|---|
| | | 1 | 2 | 3 | 4 | 1 | 2 | 3 |
| Gel content (%) | | 81.4 | 83.5 | 82.4 | 85.1 | 0.9 | 58.8 | 70.7 |
| holding power | 40°C | ◎ | ◎ | ◎ | ◎ | × | ◎ | ◎ |
| | 80°C | ◎ | ◎ | ◎ | ◎ | × | Δ | ◎ |
| | 100°C | ○ | ◎ | ○ | ◎ | × | × | × |
| | 120°C | ○ | ○ | ○ | ○ | × | × | × |
| adhesive strength (N/25mm) | | 4.4 | 3.5 | 4.4 | 3.5 | 7.4 | 6.7 | 6.0 |

Example 5

[Poly(n-butyl acrylate)-co-poly(hydroxyethyl methacrylate)]

In a glove box with the inside air replaced by argon, 59.5 μL (0.26 mmole) of ethyl-2-methyl-2-n-butyltellanyl-propionate prepared in Preparation Example 1, 95 g (0.74 mole) of n-butyl acrylate [Wako Pure Chemical Ind. Co., Ltd.], 5 g (38.4 mmoles) of 2-hydroxyethyl methacrylate [Wako Pure Chemical Ind. Co., Ltd.] and 12.9 mg (0.05 mmole) of 2,2'-azobis(2,4-dimethylvaleronitrile) [Otsuka Chemical Co., Ltd., brand name: ADVN] were reacted in 25 g of ethyl acetate at 50 °C for 24 hours. NMR analysis indicated that the polymerization ratio was 92.1 %.
After the completion of the reaction, the reaction vessel was taken out from the glove box, diluted with ethyl acetate, and oxidized by air. After washed twice with 1 % aqueous solution of sodium hydroxide, dehydrated by adding anhydrous sodium sulfate in the system, and then filtrated by use of a membrane filter (pour size of 1 μm) to obtain acrylic polymer. The polymer solution has viscosity of 4,950 mPa·S (25 °C), and contains 35.3 % of solid.
Moreover, GPC analysis (with reference to the molecular weight of an authentic sample of polystyrene) revealed that Mw was 435,500 and PD=1.61.
After drying of the polymer solution, treated by an ashing process and analyzed by ICP/MS, the metal content

in a non-volatilized part was 135 ppm.

Example 6

[Poly(2-ethylhexyl acrylate)-co-poly(hydroxyethyl methacrylate)]

In a glove box with the inside air replaced by argon, 31.7 μL (0.14 mmole) of ethyl-2-methyl-2-n-butyltellanyl-propionate prepared in Preparation Example 1, 95 g (0.52 mole) of 2-ethylhexyl acrylate [Wako Pure Chemical Ind. Co., Ltd.], 5 g (38.4 mmoles) of 2-hydroxyethyl methacrylate [Wako Pure Chemical Ind. Co., Ltd.] and 6.9 mg (0.03 mmole) of 2,2'-azobis(2,4-dimethylvaleronitrile) [Otsuka Chemical Co., Ltd., brand name: ADVN] were reacted in 25 g of ethyl acetate at 50 °C for 21 hours. NMR analysis indicated that the polymerization ratio was 93.6 %.

After the completion of the reaction, the reaction vessel was taken out from the glove box, diluted with ethyl acetate, and oxidized by air. After washed twice with 1 % aqueous solution of sodium hydroxide, dehydrated by adding anhydrous sodium sulfate in the system, and then filtrated by use of a membrane filter (pour size of 1 μm) to obtain acrylic polymer. The polymer solution has viscosity of 3,400 mPa·S (25 °C), and contains 31.7 % of solid.

Moreover, GPC analysis (with reference to the molecular weight of an authentic sample of polystyrene) revealed that Mw was 754,300 and PD=1.77.

After drying of the polymer solution, treated by an ashing process and analyzed by ICP/MS, the metal content in a non-volatilized part was 170 ppm.

Example 7

[Poly(n-butyl acrylate)-co-poly(hydroxyethyl methacrylate)]

In a glove box with the inside air replaced by argon, 25.5 μ L (0.11 mmole) of ethyl-2-methyl-2-n-butyltellanyl-propionate prepared in Preparation Example 1, 98 g (0.76 mole) of n-butyl acrylate [Wako Pure Chemical Ind. Co., Ltd.], 2 g (15.4 mmoles) of 2-hydroxyethyl methacrylate [Wako Pure Chemical Ind. Co., Ltd.] and 5.5 mg (0.02 mmole) of 2,2'-azobis(2,4-dimethylvaleronitrile) [Otsuka Chemical Co., Ltd., brand name: ADVN] were reacted in 25 g of ethyl acetate at 50 °C for 24 hours. NMR analysis indicated that the polymerization ratio was 83.8 %.

After the completion of the reaction, the reaction vessel was taken out from the glove box, diluted with ethyl acetate, and oxidized by air. After washed twice with 1 % aqueous solution of sodium hydroxide, dehydrated by adding anhydrous sodium sulfate in the system, and then filtrated by use of a membrane filter (pour size of 1 μm) to obtain acrylic polymer. The polymer solution has viscosity of 4,100 mPa·S (25 °C), and contains 20.7 % of solid.

Moreover, GPC analysis (with reference to the molecular weight of an authentic sample of polystyrene) revealed that Mw was 891,300 and PD=1.34.

After drying of the polymer solution, treated by an ashing process and analyzed by ICP/MS, the metal content in a non-volatilized part was 133 ppm.

Example 8

[Poly(hydroxyethyl methacrylate)-b-poly(n-butyl acrylate)-b-poly(hydroxyethyl methacrylate) triblock copolymer]

In a glove box with the inside air replaced by argon, 89.2 μ L (0.39 mmole) of ethyl-2-methyl-2-n-butyltellanyl-propionate prepared in Preparation Example 1, 2.5 g (38.4 mmoles) of 2-hydroxyethyl methacrylate [Wako Pure Chemical Ind. Co., Ltd.] and 19.4 mg (0.03 mole) of 2,2'-azobis(2,4-dimethylvaleronitrile) [Otsuka Chemical Co., Ltd., brand name: ADVN] were reacted in 25 g of ethyl acetate at 50 °C for 24 hours to obtain a prepolymer. To 95 g (0.74 mole) of n-butyl acrylate [Wako Pure Chemical Ind. Co., Ltd.] was added whole amount of the prepolymer solution, and reacted at 50 °C for 40 hours. To the mixture was added 205 g (38.4 mmoles) of 2-hydroxyethyl methacrylate [Wako Pure Chemical Ind. Co., Ltd.] and further reacted at 50 °C for 24 hours. NMR analysis indicated that the polymerization ratio was 96.6 %.

After the completion of the reaction, the reaction vessel was taken out from the glove box, diluted with ethyl acetate, and oxidized by air. After washed twice with 1 % aqueous solution of sodium hydroxide, dehydrated by adding anhydrous sodium sulfate in the system, and then filtrated by use of a membrane filter (pour size of 1 μm) to obtain an acrylic polymer of A-B-A triblock type. The polymer solution has viscosity of 4,100 mPa·S (25 °C), and contains 26.7 % of solid.

Moreover, GPC analysis (with reference to the molecular weight of an authentic sample of polystyrene) revealed that Mw was 360,200 and PD=1.41.

After drying of the polymer solution, treated by an ashing process and analyzed by ICP/MS, the metal content in a non-volatilized part was 98 ppm.

Comparative Example 4

[Poly(2-ethylhexyl acrylate)-co-poly(hydroxyethyl methacrylate)]

A quantity of 95 g (0.74 mole) of 2-ethylhexyl acrylate [Wako Pure Chemical Ind. Co., Ltd.], 5 g (38.4 mmoles) of 2-hydroxyethyl methacrylate [Wako Pure Chemical Ind. Co., Ltd.] and 100 mg of 2,2'-azobis(isobutyronitrile) [Otsuka Chemical Co., Ltd., brand name: AIBN] were reacted in 150 g of ethyl acetate at 60 °C for 17 hours under nitrogen atmosphere. NMR analysis indicated that the polymerization ratio was 97.5%.

After the reaction, the mixture was diluted with ethyl acetate to obtain an acrylic polymer. The polymer solution has viscosity of 4,400 mPa·S (25 °C), and contains 37.6 % of solid.

GPC analysis (with reference to the molecular weight of an authentic sample of polystyrene) revealed that the weight average molecular weight (Mw) was 648,200 and PD=9.22.

Comparative Example 5

[Poly(n-butyl acrylate)-co-poly(hydroxyethyl methacrylate)]

A quantity of 95 g (0.74 mole) of n-butyl acrylate [Wako Pure Chemical Ind. Co., Ltd.], 5 g (38.4 mmoles) of 2-hydroxyethyl methacrylate [Wako Pure Chemical Ind. Co., Ltd.] and 360 mg of 2,2'-azobis(isobutyronitrile) [Otsuka Chemical Co., Ltd., brand name: AIBN] were reacted in 150 g of ethyl acetate at 60 °C for 17 hours under nitrogen atmosphere. NMR analysis indicated that the polymerization ratio was 97.2%.

After the reaction, the mixture was diluted with ethyl acetate to obtain an acrylic polymer. The polymer solution has viscosity of 4,300 mPa·S (25 °C), and contains 31.6 % of solid.

GPC analysis (with reference to the molecular weight of an authentic sample of polystyrene) revealed that the weight average molecular weight (Mw) was 627,400 and PD=3.68.

Example 9

To 100 parts by weight (as solid) of the acrylic polymer solution obtained in Example 5, was added 3 parts of CORONATE HL [Nippon Polyurethane Ind. Co., Ltd.] as a cross-linking agent while stirring to obtain a pressure sensitive adhesive composition.

The resulting composition was applied on a PET release liner (50 μm thickness), so that the thickness after drying to be 25 μm, and dried at 95 °C for 2 minutes, and then to which PET film of 25μm thickness was transferred to produce a surface protection film of the present invention.

Example 10

To 100 parts by weight (as solid) of the acrylic polymer solution obtained in Example 6, was added 3 parts of CORONATE HL as a cross-linking agent, and a surface protection film of the invention was prepared in the same manner as in Example 9.

Example 11

To 100 parts by weight (as solid) of the acrylic polymer solution obtained in Example 6, was added 6 parts of CORONATE HL as a cross-linking agent, and a surface protection film of the invention was prepared in the same manner as in Example 9.

Comparative Example 6

To 100 parts by weight (as solid) of the acrylic polymer solution obtained in Comparative Example 4, was added 3 parts of CORONATE HL as a cross-linking agent, and a surface protection film for comparison was prepared in the same manner as in Example 9.

Test Example 2

Gel content, adhesive strength test and ball tack test were carried out by the following method for the surface protection films which were obtained in Examples 9 to 11 and Comparative Example 6. The results were shown in Table 2.

(Method of measuring cross-linking degree: D1)

FT-IR refraction spectra of the films obtained mentioned above were measured. On the basis of C-H vibration (2960 $cm^{-1}$) of the polymer and NH vibration (1536 $cm^{-1}$) of the urethane bond, cross-linking degree was calculated by the formula mentioned below.

$$\text{Cross-linking degree} = [\text{Absorbance of C-H vibration} / \text{Absorbance of N-H vibration}]$$

(Method of measuring gel fraction rate: A2)

The weight W1 (about 1 g) of the pressure sensitive adhesive composition after drying of the film mentioned above was measured and put into a cylinder type filter paper of the weight W0, and was extracted by 200mL of ethyl acetate in a vessel equipped with the Soxhlet extractor for 14 hours under reflux.
The cylinder type filter paper was taken out after the extraction test, and after dried under the reduced pressure at 130 °C for 3 hours, the weight W2 was measured, and the gel content was calculated by the same method as in the gel content A1.
As for adhesive strength, 180 ° peel strength was measured in the same manner as in the method of measuring adhesion force C1 except of using SUS304 (mirror finish) instead of SUS304.

(Method of evaluating adhesive residue: E1)

The surface of the adherend object after a measurement of adhesive strength was observed visually, and was evaluated as follows.
○ -- No remarkable stain on the adherend surface.
Δ -- Cloud on the adherend surface.
× -- Clear adhesive residue on the adherend surface (condensation destruction or transfer).
The holding power was measured at 120 °C and in the same manner as in the method of measuring the retention force B1.

(Method of measuring ball tack: F)

The ball tack of the films mentioned above was measured at the condition of 23 °C and 50 % RH according to a slope type method of measuring ball tack of JIS Z 0237.

[Table 2]

| | cross-linking degree | gel content | adhesive strength (N/ 25mm) | adhesive residue | holding power (120 °C) | ball tack |
|---|---|---|---|---|---|---|
| Ex.9 | 0.088 | 90.7% | 4.97 | ○ | ◎ | 17 |
| Ex.10 | 0.071 | 91.1% | 2.29 | ○ | ◎ | 16 |
| Ex.11 | 0.115 | 94.6% | 2.17 | ○ | ◎ | 12 |
| Com.Ex.6 | 0.071 | 95.6% | 6.38 | Δ | Δ | 15 |

As it is clear from Table 2, the adhesive layer of this invention, obtained by the living radical polymerization method and by use of polymers of Mw > 300,000, Mw / Mn of less than 1.8 and having uniformed molecular weight, is excellent in heat resistance and resistance to staining an adherend object. Further, the adhesive layer of the present invention has a high tack property, and is excellent in wetting ability to an adherend object.

Example 12

The pressure sensitive adhesive composition of Example 2 was applied on a PET release liner(50μm thickness) so that the thickness after drying to be 25 μm and dried at 95 °C for 2 minutes, and then to which a commercial polarizing film(Dealt by Tech-Jam Co., Ltd.: Catalog No. KN3115821) was transferred to produce an optical film of the present invention.

Example 13

To 100 parts by weight (as solid) of the acrylic polymer solution obtained in Example 6, was added 1 part of CORONATE HL as a cross-linking agent, and an optical film of the invention was prepared in the same manner as in Example 12.

Example 14

To 100 parts by weight (as solid) of the acrylic polymer solution obtained in Example 7, was added 0.4 part of CORONATE HL as a cross-linking agent, and an optical film of the invention was prepared in the same manner as in Example 12.

Example 15

To 100 parts by weight (as solid) of the A-B-A triblock polymer solution obtained in Example 8, was added 3 parts of CORONATE HL as a cross-linking agent, and an optical film of the invention was prepared in the same manner as in Example 12.

Comparative Example 7

To 100 parts by weight (as solid) of the acrylic polymer solution obtained in Comparative Example 5, was added 3 parts of CORONATE HL as a cross-linking agent, and an optical film for comparison was prepared in the same manner as in Example 12.

Test Example 3

Gel content, holding power test, adhesive strength test and ball tack test were carried out by the following method for the optical films obtained in Examples 12 to 15 and Comparative Example 7. The results were shown in Table 3.
The cross-linking degree was calculated in the same manner as in the method of measuring cross-linking degree D1.
The gel fraction rate was calculated in the same manner as in the method of measuring gel fraction rate A2.

(Method of measuring adhesion force: C2)

A non-alkali glass (#1737, product of Corning Glass Works) was prepared as an adherend object, the adhesion film mentioned above was pasted on the adherend object at 23 °C, RH 50%, and the 90 ° peeling strength was measured according to the measuring method of an adhesive strength of JIS Z 0237.
The adhesive residue was evaluated in the same manner as in the method of E1.
The holding power was measured at 120 °C and in the same manner as in the method of measuring the holding power B1.

(Durability: G)

The optical film of a size of 160 x 160 mm obtained as above was patched on a non-alkali glass of a size of 195 x 195 mm (Corning Glass Works, #1737), was put into the atmosphere of 80 °C (for heat durability) and 60 °C, 90 % RH (for humidification durability) for 500 hours, were observed visually blister formation, flagging and uneven coloring on the optical film, and then was evaluated by the following standard.

< Blister and peeling >

○-- no blister formation, lifting and flagging
X-- blister formation, lifting or/and flagging
< Uneven coloring >
○ -- no uneven coloring
Δ -- slightly uneven coloring
× -- uneven coloring

[Table 3]

| | cross-linking degree | gel content | adhesive (N/25mm) | adhesive strength residue | holding power (120 °C) | ball tack |
|---|---|---|---|---|---|---|
| Ex.12 | 0.094 | 83.5% | 6.57 | ○ | ◎ | 17 |
| Ex.13 | 0.040 | 99.3% | 4.74 | ○ | ◎ | 18 |
| Ex.14 | 0.040 | 86.3% | 4.48 | ○ | ◎ | 18 |
| Ex.15 | 0.074 | 87.7% | 5.23 | ○ | ○ | 18 |
| Com.Ex.7 | 0.083 | 83.9% | 7.81 | ○ | × | 9 |

[Table 4]

| | heat durability (80 °C) | | humidification durability (60 °C, 90%) | |
|---|---|---|---|---|
| | blister and flagging | uneven coloring | blister and flagging | uneven coloring |
| Ex. 12 | ○ | Δ | ○ | ○ |
| Ex. 13 | ○ | ○ | ○ | ○ |
| Ex. 14 | ○ | ○ | ○ | ○ |
| Ex.15 | ○ | Δ | ○ | ○ |
| Com. Ex. 7 | × | × | × | × |

As it is clear from Tables 3 and 4, the optical film of the present invention exhibits no flagging nor blister formation under the environment of high temperature and high humidity, and is excellent in the durability. Moreover, since the adhesive layer of this invention is excellent in stress relaxing property, it can release uniformly the stress resulting from size change of an optical component material, and can suppress unevenness in colorings.

INDUSTRIAL APPLICABILITY

It is possible to make the molecular weight distribution (PD value) of the resin composition of the present invention less than 2.0, and therefore when in use as the pressure sensitive adhesive, the production of low molecular weight ingredient (oligomer) and homopolymer that have been known to cause a decline of heat resistance under the environment in use or contamination of the adherend surface by the adhesive residue at the time of removal can be well suppressed, and it is relatively easy to remove the remained initiator (tellurium metal) from a resin composition.

As the result, the pressure sensitive adhesive using the resin composition of this invention shows the excellent effect in heat resistance, and is free from such problems as a decrease of the optical characteristics caused by a remaining initiator, a decrease of the reliability caused by the extraneous substance included, and a discomfort by bad smell.

## Claims

**1.** A resin composition containing a copolymer which is obtained by copolymerizing 80 to 99.9 parts by weight of a vinyl monomer mainly containing a (meth)acrylic acid alkyl ester and 0.1 to 20 parts by weight of a vinyl monomer having a reactive functional group by living radical polymerization, while using, as a polymerization initiator, one of the following: (a) to (d),

(a) an organotellurium compound of the formula (1);
(b) a mixture of an organotellurium compound of the formula (1) and an azo polymerization initiator;
(c) a mixture of an organotellurium compound of the formula (1) and an organoditellurium compound of the formula (2); and
(d) a mixture of an organotellurium compound of the formula (1), an azo polymerization initiator and an organoditellurium compound of the formula (2),

and which is further **characterized in that** the metal content in the composition is not more than 1000 ppm

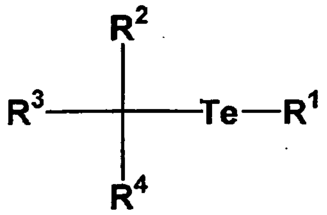

(1)

wherein $R^1$ is $C_1$-$C_8$ alkyl, aryl group, substituted aryl or aromatic heterocyclic group; $R^2$ and $R^3$ are respectively a hydrogen atom or $C_1$-$C_8$ alkyl; and $R^4$ is aryl, substituted aryl, aromatic heterocyclic group, acyl, amide, oxycarbonyl or cyano

$(R^1Te)_2$ (2)

wherein $R^1$ is as defined above.

2. A resin composition as defined in claim 1 wherein PD value of the copolymer is 1.05 to 2.00.

3. A resin composition as defined in claim 1 wherein a metal content is not more than 200 ppm.

4. A pressure sensitive adhesive comprising the resin composition of claim 1.

5. A pressure sensitive adhesive which comprises 0.1 to 10 parts by weight of a cross-linking agent per 100 parts by weight of the resin composition of claim 1 and the gel fraction rate after cross-linking reaction is more than 80 wt %.

6. A pressure sensitive adhesive for a surface protection film which comprises 3 to 10 parts by weight of a cross-linking agent per 100 parts by weight of the resin composition of claim 1.

7. A pressure sensitive adhesive for an optical film which comprises 0.1 to 3 parts by weight of a cross-linking agent per 100 parts by weight of the resin composition of claim 1.

8. An adhesion film which forms the pressure sensitive adhesive defined in any of claims 5 to 7 on a film substrate.

9. A surface protection film obtained by forming an adhesive layer of the pressure sensitive adhesive defined in any of claims 5 to 7 on a substrate of a surface protection film.

10. An optical film obtained by forming an adhesive layer of the pressure sensitive adhesive defined in any of claims 5 to 7 on a substrate of an optical film.

## Patentansprüche

1. Harzzusammensetzung, enthaltend ein Copolymer, erhalten durch Copolymerisieren von 80 bis 99,9 Gewichtsteilen eines Vinylmonomers, das hauptsächlich einen Meth(acryl)säurealkylester enthält, und 0,1 bis 20 Gewichtsteilen eines Vinylmonomers, das eine reaktive funktionelle Gruppe enthält, durch lebende radikalische Polymerisation unter Verwendung eines der folgenden (a) bis (d) als Polymerisationsinitiator:

(a) einer tellurorganischen Verbindung der Formel (1)

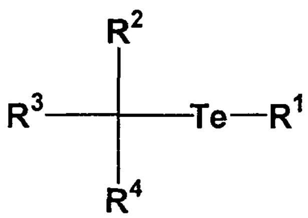

(1)

worin $R^1$ $C_1$-$C_8$-Alkyl, eine Arylgruppe, substituiertes Aryl oder eine aromatische heterocyclische Gruppe ist; $R^2$ und $R^3$ jeweils ein Wasserstoffatom oder $C_1$-$C_8$-Alkyl sind; und $R^4$ Aryl, substituiertes Aryl, eine aromatische heterocyclische Gruppe, Acyl, Amid, Oxycarbonyl oder Cyan ist;

(b) einer Mischung aus einer tellurorganischen Verbindung der Formel (1) und einem Azo-Polymerisationsinitiator;

(c) einer Mischung aus einer tellurorganischen Verbindung der Formel (1) und einer organischen Ditellurverbindung der Formel (2)

$$(R^1Te)_2 \qquad (2)$$

worin $R^1$ wie oben definiert ist; und

(d) einer Mischung aus einer tellurorganischen Verbindung der Formel (1), einem Azo-Polymerisationsinitiator und einer organischen Ditellurverbindung der Formel (2),

und weiterhin **dadurch gekennzeichnet, dass** der Metallgehalt in der Zusammensetzung nicht mehr als 1000 ppm beträgt.

**2.** Harzzusammensetzung nach Anspruch 1, wobei der PD-Wert des Copolymers 1,05 bis 2,00 ist.

**3.** Harzzusammensetzung nach Anspruch 1, wobei der Metallgehalt nicht mehr als 200 ppm beträgt.

**4.** Druckempfindliches Klebemittel, umfassend die Harzzusammensetzung gemäß Anspruch 1.

**5.** Druckempfindliches Klebemittel, welches 0,1 bis 10 Gewichtsteile eines Vernetzungsmittels pro 100 Gewichtsteile der Harzzusammensetzung gemäß Anspruch 1 umfasst und wobei der Gelanteil nach der Vernetzungsreaktion mehr als 80 Gew.-% beträgt.

**6.** Druckempfindliches Klebemittel für eine Oberflächenschutzfolie, welches 3 bis 10 Gewichtsteile eines Vernetzungsmittels pro 100 Gewichtsteile der Harzzusammensetzung gemäß Anspruch 1 umfasst.

**7.** Druckempfindliches Klebemittel für eine optische Folie, welches 0,1 bis 3 Gewichtsteile eines Vernetzungsmittels pro 100 Gewichtsteile der Harzzusammensetzung gemäß Anspruch 1 umfasst.

**8.** Adhäsionsfolie, welche das druckempfindliche Klebemittel nach einem der Ansprüche 5 bis 7 auf einem Foliensubstrat bildet.

**9.** Oberflächenschutzfolie, erhalten durch Bilden einer Klebeschicht aus dem druckempfindlichen Klebemittel nach einem der Ansprüche 5 bis 7 auf einem Substrat für eine Oberflächenschutzfolie.

**10.** Optische Folie, erhalten durch Bilden einer Klebeschicht aus dem druckempfindlichen Klebemittel nach einem der Ansprüche 5 bis 7 auf einem Substrat für eine optische Folie.

## Revendications

**1.** Composition de résine contenant un copolymère qui est obtenu par copolymérisation de 80 à 99,9 parties en poids d'un monomère de vinyle contenant principalement un ester d'alkyle d'acide (méth)acrylique et de 0,1 à 20 parties en poids d'un monomère de vinyle ayant un groupe fonctionnel réactif par polymérisation radicalaire vivante, tout en utilisant, comme initiateur de polymérisation, l'un des composés suivants : (a) à (d),

(a) un composé d'organotellure de formule (1) ;

(b) un mélange d'un composé d'organotellure de formule (1) et d'un initiateur de polymérisation azo ;

(c) un mélange d'un composé d'organotellure de formule (1) et d'un composé d'organoditellure de formule (2) ; et

(d) un mélange d'un composé d'organotellure de formule (1), d'un initiateur de polymérisation azo et d'un composé d'organoditellure de formule (2),

et qui est en outre **caractérisée en ce que** la teneur en métal dans la composition n'est pas supérieure à 1000 ppm

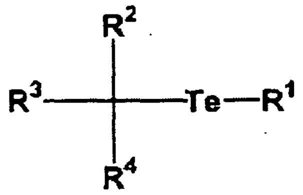

(1)

dans laquelle $R^1$ est un groupe alkyle en $C_1$-$C_8$, un groupe aryle, un groupe aryle substitué ou un groupe hétérocyclique aromatique ; $R^2$ et $R^3$ sont respectivement un atome d'hydrogène ou un groupe alkyle en $C_1$-$C_8$ ; et $R^4$ est un groupe aryle, un groupe aryle substitué, un groupe hétérocyclique aromatique, un groupe acyle, un groupe amide, un groupe oxycarbonyle ou un groupe cyano

$$(R^1Te)_2 \qquad (2)$$

dans laquelle $R^1$ est tel que défini ci-dessus.

**2.** Composition de résine telle que définie dans la revendication 1, dans laquelle la valeur PD du copolymère est de 1,05 à 2,00.

**3.** Composition de résine telle que définie dans la revendication 1, dans laquelle la teneur en métal n'est pas supérieure à 200 ppm.

**4.** Adhésif sensible à la pression comprenant la composition de résine de la revendication 1.

**5.** Adhésif sensible à la pression qui comprend de 0,1 à 10 parties en poids d'un agent de réticulation pour 100 parties en poids de la composition de résine de la revendication 1 et le taux de fraction de gel après la réaction de réticulation est supérieur à 80 % en poids.

**6.** Adhésif sensible à la pression pour un film de protection de surface qui comprend de 3 à 10 parties en poids d'un agent de réticulation pour 100 parties en poids de la composition de résine de la revendication 1.

**7.** Adhésif sensible à la pression pour un film optique qui comprend de 0,1 à 3 % en poids d'un agent de réticulation pour 100 parties en poids de la composition de résine de la revendication 1.

**8.** Film adhésif qui forme l'adhésif sensible à la pression défini selon l'une quelconque des revendications 5 à 7 sur un substrat filmogène.

**9.** Film de protection de surface obtenu par la formation d'une couche adhésive de l'adhésif sensible à la pression défini selon l'une quelconque des revendications 5 à 7 sur un substrat d'un film de protection de surface.

**10.** Film optique obtenu par la formation d'une couche adhésive de l'adhésif sensible à la pression défini selon l'une quelconque des revendications 5 à 7 sur un substrat d'un film optique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3272921 B
- JP 10298248 A
- JP 11255812 A
- WO 200414848 A
- WO 200414962 A
- JP 2005041321 A